# EUROPÄISCHE PATENTSCHRIFT

(11) **EP 2 752 272 B1**
(45) Veröffentlichungstag und Bekanntmachung des Hinweises auf die Patenterteilung: **30.05.2018**
(21) Anmeldenummer: 13196745.7
(22) Anmeldetag: 11.12.2013
(51) Int. Cl.: B24B 23/04, B24B 47/12, B24B 41/00

(54) **Oszillierend angetriebene Werkzeugmaschine**
Oscillation driven machine tool
Machine-outil à entraînement oscillant

(30) Priorität: 07.01.2013 DE 102013100085
(43) Veröffentlichungstag der Anmeldung: 09.07.2014
(73) Patentinhaber: C. & E. Fein GmbH, 73529 Schwäbisch Gmünd-Bargau (DE)
(72) Erfinder: Clabunde, Joachim, 73540 Heubach (DE)

(56) Entgegenhaltungen:
- DE-A1-102004 047 811
- DE-A1-102010 027 205
- DE-U1- 9 315 019
- US-A- 2 885 833

## Beschreibung

Die Erfindung betrifft eine oszillierend angetriebene Werkzeugmaschine, mit einer durch einen Motor rotatorisch antreibbaren Motorwelle, die über ein Getriebe und einen Exzenterkoppeltrieb mit einer Werkzeugspindel zu deren oszillierendem Antrieb koppelbar ist.

Eine derartige oszillierend angetriebene Werkzeugmaschine ist aus der DE 10 2010 046 629 A1 bekannt. Hierbei treibt ein Motor mit seiner Motorwelle unmittelbar einen Exzenterkoppeltrieb an, der die rotierenden Antriebsbewegungen der Motorwelle in eine oszillierende Bewegung umsetzt, die über ein Planetenradgetriebe in eine oszillierende Abtriebsbewegung einer Werkzeugspindel mit entgegengesetztem Drehsinn umgesetzt wird.

Mit einer derartigen Anordnung lässt sich eine Werkzeugspindel um ihre Längsachse drehoszillierend antreiben, wobei je nach Antriebsdrehzahl des Motors, Übersetzungsverhältnis des Planetenradgetriebes, Exzentrität und Hebelarm des Exzenterkoppeltriebes die Werkzeugspindel mit einer Frequenz im gewünschten Bereich von etwa 5.000 bis 30.000 1/min und einem Verschwenkwinkel im Bereich von etwa 0,5° bis 7° angetrieben werden kann.

Ferner werden durch die durch das Planetenradgetriebe bewirkte Bewegungsumkehr die mit dem Getriebe verbundenen Vibrationen sehr gering gehalten.

Als nachteilig sind jedoch die relativ hohe Geräuschentwicklung und die Verschleißanfälligkeit des Getriebes anzusehen.

In ähnlicher Weise ist die Werkzeugmaschine gemäß der DE 10 2010 027 205 A1 zu beurteilen. Auch hierbei treibt ein Motor eine Antriebswelle rotatorisch an, die über einen Koppeltrieb eine Werkzeugspindel um ihre Längsachse drehoszillierend antreibt. Zur Schwingungsdämpfung ist hierbei eine Tilgermasse vorgesehen.

Durch die Tilgermasse wird das Gewicht erhöht. Gleichfalls ergibt sich eine relativ hohe Geräuschentwicklung.

Als Alternativen zur Verwendung von Zahnradgetrieben sind im Stand der Technik vereinzelt auch Riementriebe bekannt geworden, um bei Handwerkzeugen eine Werkzeugspindel anzutreiben.

So ist es etwa aus der DE 43 42 986 C2 bekannt, einen Exzenterschleifer über einen Riementrieb anzutreiben, der die Drehbewegung des Antriebsmotors über Umlenkrollen in eine Drehbewegung einer winklig zur Motorwelle verlaufenden Abtriebswelle umsetzt, die eine Exzenterscheibe antreibt.

Auch aus der US 2012/0080206 A1 ist die Verwendung eines Riementriebes in Zusammenhang mit einem Schleifgerät bekannt. Hierbei wird der Riementrieb jedoch nur zum Antrieb einer Absaugeinrichtung verwendet.

Gemäß der DE 93 15 019 U1 wird schließlich ein Riemenantrieb zum Antrieb eines Exzenterschleiftellers verwendet.

Den vorstehend genannten Riementrieben ist jedoch gemeinsam, dass diese immer nur zur Übertragung einer rotatorischen Bewegung eingesetzt werden.

Aus der EP 0 337 303 A2 ist ferner eine Antriebsvorrichtung für ein Sägeblatt bekannt, bei der ein durch einen Exzenterbolzen von einer Motorwelle betriebener Pleuel genutzt wird, um eine einseitig gelagerte Schwinge oszillierend anzutreiben. Am freien Ende der Schwinge ist ein als Übertragungsmittel vorgesehenes gespanntes Band befestigt, das zum Antrieb eines Sägewerkzeuges dient.

Es handelt sich hierbei aber nicht um einen Riementrieb im klassischen Sinne, sondern lediglich um einen Seiltrieb, der zur Übertragung der Antriebsbewegung einer oszillierend angetriebenen Schwinge unmittelbar auf ein an dem Seil oder Band befestigtes Sägeblatt dient.

Aus der US 2 885 833 A ist ferner eine Werkzeugmaschine in Form eines Exzenterschleifers bekannt, der mittels eines Riemenantriebs angetrieben wird. Der Riementrieb treibt einen Exzenterzapfen an, der eine Schleifplatte mit einer exzentrisch kreisenden Bewegung antreibt. Zum Ausgleich einer Massenunwucht ist ein exzentrisches Gegengewicht vorgesehen.

Vor diesem Hintergrund liegt der Erfindung die Aufgabe zugrunde, eine oszillierend angetriebene Werkzeugmaschine mit einer oszillierend angetriebenen Werkzeugspindel gemäß der eingangs genannten Art derart zu verbessern, dass die Geräuschentwicklung und der Verschleiß möglichst gering gehalten werden.

Diese Aufgabe wird bei einer Vorrichtung gemäß der eingangs genannten Art dadurch gelöst, dass das Getriebe als Zahnriementrieb ausgebildet ist, der ein erstes vom Motor angetriebenes Riemenrad aufweist, und der eine zweites Riemenrad aufweist, das den Exzenterkoppeltrieb antreibt, dass der Exzenterkoppeltrieb einen Exzenterzapfen aufweist, der vom zweiten Riemenrad angetrieben wird, dass der Exzenterzapfen gemeinsam mit einem darauf gehaltenen Exzenterlager auf dem zweiten Riemenrad aufgenommen ist, dass das zweite Riemenrad einen Massenausgleich zum Ausgleich der durch den Exzenterzapfen und das Exzenterlager verursachten Unwucht aufweist, und dass der Exzenterkoppeltrieb zur Umsetzung einer vom Exzenterkoppeltrieb erzeugten oszillierenden Antriebsbewegung in eine oszillierende Antriebsbewegung der Werkzeugspindel mit entgegengesetztem Drehsinn ausgebildet ist.

Die Erfindung wird auf diese Weise gelöst.

Erfindungsgemäß wird statt eines Zahnradgetriebes nunmehr zur Übersetzung, vorzugsweise zur Untersetzung, der Antriebsbewegung des Motors ein Zahnriementrieb verwendet. Dies hat den Vorteil, dass Geräuschentwicklungen und Verschleiß im Vergleich zu Zahnradgetrieben deutlich vermindert werden. Ein weiterer Vorteil besteht darin, dass ein Zahnriementrieb im Gegensatz zu anderen Riementrieben, wie etwa Keilriementrieben, ohne weiteres innerhalb des Getriebegehäuses eingesetzt werden kann, ohne eine Abdichtung gegenüber Öl, Fett und dergleichen zu erfordern. Üblicherweise müssen nämlich andere Riementriebe, die auf einer kraftschlüssigen Übertragung beruhen, wie etwa Keilriementriebe, im Trockenen laufen, da nur so ein ausreichender Reibkoeffizient zur Übertragung gewährleistet ist. Dies erfordert aufwändige Abdichtungsmaßnahmen, um den Riementrieb in jedem Fall trocken zu halten. Dagegen kann ein Zahnriementrieb sowohl trocken als auch geschmiert laufen.

Ein weiterer Vorteil bei der Verwendung eines Zahnriementriebes besteht darin, dass der Abstand zwischen den Riemenscheiben fest, also nicht einstellbar, ausgeführt werden kann, da kein Spannen des Riemens notwendig ist. Dies erleichtert die Montage und stellt sicher, dass kein Nachstellen des Riemens im Betrieb notwendig ist.

Ferner wird der Zahnriementrieb in einer Richtung laufend verwendet, was sich vorteilhaft auf den Verschleiß auswirkt. Da der Exzenterkoppeltrieb einen Exzenterzapfen aufweist, der vom zweiten Riemenrad angetrieben wird, werden eine besonders kompakte Baugröße und ein einfacher Aufbau realisiert.

Da der Exzenterkoppeltrieb zur Umsetzung einer vom Exzenterkoppeltrieb erzeugten oszillierenden Antriebsbewegung in eine oszillierende Antriebsbewegung der Werkzeugspindel mit entgegengesetztem Drehsinn ausgebildet ist, werden die durch den Exzenter und das Exzenterlager verursachte Unwucht ausgeglichen und das Gesamtniveau der erzeugten Vibrationen deutlich gesenkt.

Gemäß einer weiteren Ausgestaltung der Erfindung weist der Zahnriementrieb eine Untersetzung ins Langsame auf, vorzugsweise im Bereich von 1:2 bis 1:5, weiter bevorzugt im Bereich von 1:2,5 bis 1:3,2.

Hiermit ergibt sich der Vorteil, dass die übliche Antriebsdrehzahl eines Universalmotors mit einer Motordrehzahl von etwa 30.000 1/min genutzt werden kann, um eine Oszillation der Werkzeugspindel im Bereich von etwa 7.500 bis 15.000 1/min zu bewirken. Dies ist die bevorzugte Antriebsdrehzahl für die Werkzeugspindel eines oszillierend angetriebenen Werkzeugs, das insbesondere zum Schleifen verwendet wird, während die Antriebsdrehzahl eines Universalmotors typischerweise im Bereich um etwa 30.000 1/min liegt.

Hierzu weist das zweite Riemenrad in bevorzugter Weiterbildung der Erfindung auf der Seite, auf der der Exzenterzapfen angeordnet ist, eine Aussparung auf.

So kann die Unwucht auf besonders einfache Weise ausgeglichen werden.

Gemäß einer weiteren Ausführung der Erfindung weist der Exzenterkoppeltrieb einen Exzenterhebel auf, der an einem ersten Ende schwenkbar gelagert ist und an einem zweiten Ende vom Exzenterzapfen angetrieben ist.

Hierbei ist die Werkzeugspindel vorzugsweise mittels eines Schwinghebels angetrieben, der am Exzenterhebel drehbeweglich angreift.

Auf diese Weise ist eine einfache Umsetzung der vom Exzenter erzeugten oszillierenden Bewegung des Exzenterhebels in eine oszillierende Antriebsbewegung der Werkzeugspindel mit entgegengesetztem Drehsinn ermöglicht.

Gemäß einer weiteren Ausgestaltung der Erfindung weist der Exzenterkoppeltrieb ein Ausgleichsgewicht auf, das vom Exzenterhebel angetrieben ist.

Vorzugsweise ist hierbei das Ausgleichsgewicht am äußeren Ende des Exzenterhebels aufgenommen.

Hierbei kann die Ausgleichsmasse ferner außerhalb des Getriebegehäuses angeordnet werden, wodurch das Getriebegehäuse sehr kompakt ausgeführt werden kann. Der Schmierfettraum kann somit klein gehalten werden, so dass der Fettbedarf auf ein Minimum reduziert werden kann. Ferner können Leistungsverluste der Maschine, die durch Walkarbeit, verursacht durch hin- und her bewegtes Fett, entstehen, deutlich reduziert werden.

Insgesamt ergibt sich auf diese Weise ein sehr vibrationsarmer Lauf, verbunden mit einer geringen Erwärmung und einem hohen Wirkungsgrad der Maschine.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: einen Teilschnitt durch eine erfindungsgemäße Werkzeugmaschine im Bereich des Getriebegehäuses;
- Fig. 2: eine vergrößerte Darstellung des erfindungsgemäßen Zahnriementriebes in perspektivischer Ansicht mit einem Lagerbock, an dem Motor und Keilriementrieb gelagert sind und
- Fig. 3: eine vergrößerte Ansicht des Keilriementriebes gemäß Fig. 2 von vorn.

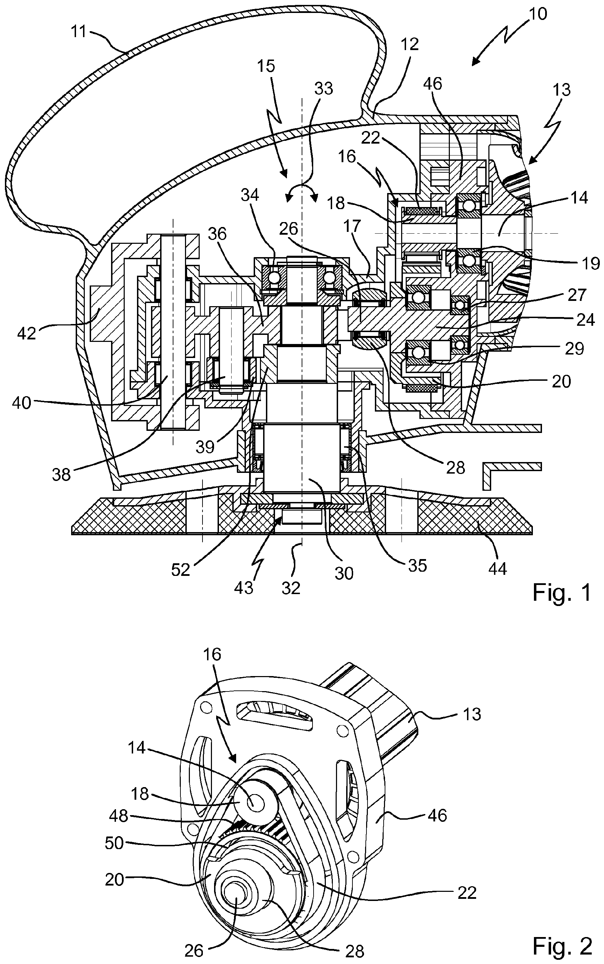

In Fig. 1 ist eine erfindungsgemäße Werkzeugmaschine in Form eines handgehaltenen Schleifgerätes im Bereich seines Getriebekopfes dargestellt und insgesamt mit der Ziffer 10 bezeichnet.

Die Werkzeugmaschine 10 weist ein Maschinengehäuse 12 auf, innerhalb dessen ein Getriebegehäuse 17 vorgesehen ist, in dem eine Werkzeugspindel 30 gelagert ist, die mit ihrem einen Ende aus dem Getriebegehäuse 17 und dem Maschinengehäuse 12 heraus nach außen hervorsteht.

Die Werkzeugspindel 30 ist mittels zweier Lager 34, 35 gelagert und weist an ihrem äußeren Ende eine Aufnahme 43 auf, an der ein Werkzeug 44, im vorliegenden Fall ein Schleifwerkzeug, lösbar befestigt ist.

Am oberen Ende des Maschinengehäuses 12 ist auf einer dem Werkzeug 44 abgewandten Seite ein Handgriff 11 angedeutet, an dem die Werkzeugmaschine 10 während eines Arbeitsvorgangs gehalten werden kann.

Innerhalb des Getriebegehäuses 17 ist ein insgesamt mit 15 bezeichneter Exzenterkoppeltrieb aufgenommen, der die rotierende Antriebsbewegung eines Motors 13 in eine drehoszillierende Antriebsbewegung der Werkzeugspindel 30 um ihre Längsachse 32 umsetzt, wie durch einen Doppelpfeil 33 angedeutet ist.

Der Exzenterkoppeltrieb 15 versetzt die Werkzeugspindel 30 in eine oszillierende Antriebsbewegung mit einer Frequenz zwischen etwa 5.000 und 15.000 1/min und einem Verschwenkwinkel im Bereich von etwa 0,5° bis 7°.

Die rotierende Antriebsbewegung der Motorwelle 14 des Motors 13 wird zunächst über einen Zahnriementrieb 16 in eine Antriebsbewegung einer Exzenterwelle 24 untersetzt. An der Exzenterwelle 24 sitzt ein Exzenterzapfen 26, auf dem ein balliges Exzenterlager 28 gehalten ist.

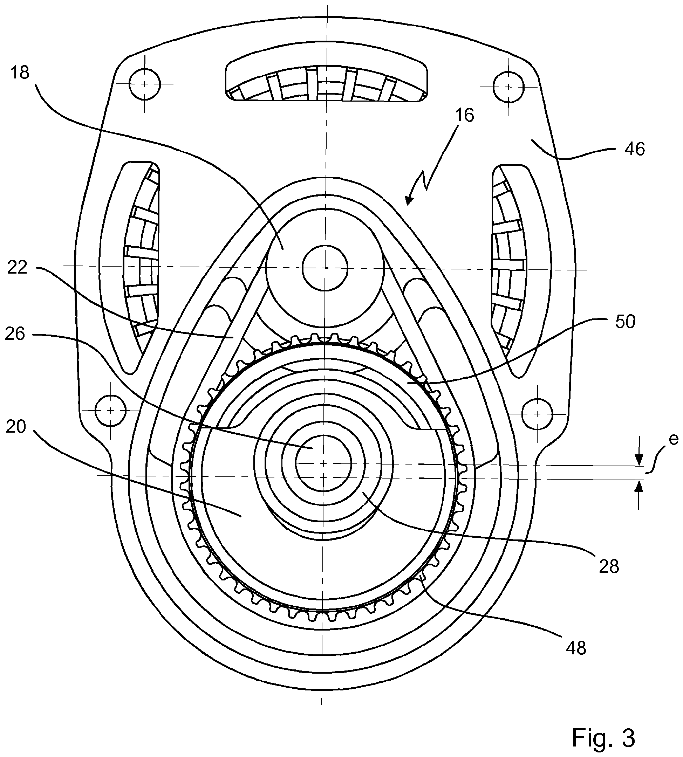

In den Figuren 2 und 3 ist der Zahnriementrieb 16 erkennbar, der an einem Lagerbock 46 aufgenommen ist. Am Lagerbock 46 ist auch die Motorwelle 14 mittels eines Motorlagers 19 gelagert. Ferner ist am Lagerbock 46 die Exzenterwelle 24 mit dem Exzenterzapfen 26 und dem Exzenterlager 28 mittels zweier Lager 27, 29 gelagert.

Der Zahnriementrieb 16 weist ein erstes Riemenrad 18 auf, das unmittelbar am Ende der Motorwelle 14 aufgenommen ist. Der Zahnriementrieb 16 weist ferner ein zweites Riemenrad 20 auf, das auf der Exzenterwelle 24 aufgenommen ist. Ein Zahnriemen 22 wird vom ersten Riemenrad 18 angetrieben und treibt das zweite Riemenrad 20 über dessen Verzahnung 48 an, wodurch der Exzenterzapfen 26 mit dem darauf gehaltenen Exzenterlager 28 in eine exzentrische Bewegung versetzt wird.

Bei dem Motor 13 handelt es sich vorzugsweise um einen Universalmotor, der bspw. eine Motordrehzahl von 30.250 1/min (ggf. 27.500 1/min) aufweist.

Der Zahnriementrieb weist bspw. eine Riemenuntersetzung von 1:2,75 auf, wodurch sich für die Werkzeugspindel 30 und das darauf gehaltene Schleifwerkzeug 44 eine Schwingzahl von 11.000 1/min (bei einer Motordrehzahl von 27.500 1/min von 10.000 1/min) ergibt.

Der Exzenterradius beträgt bspw. 3,56 mm (vgl. Fig. 3, Exzentrität e), womit sich ein Exzenterhub von 7,12 mm ergibt. Dieser Exzenterhub wird über den Exzenterkoppeltrieb 15 in einen Schwenkwinkel der Werkzeugspindel 30 von ± 3° (6° absolut) umgesetzt.

Wie aus den Figuren 2 und 3 ersichtlich, weist das zweite Riemenrad 20 auf der Seite des Exzenterzapfens 26 eine Aussparung 50 auf, um die Unwucht, die durch den Versatz des Exzenterzapfens 26 um die Exzentrität e bewirkt wird, auszugleichen.

Die Bewegung des Exzenterzapfens 26 bzw. des Exzenterlagers 28 wird in eine oszillierende Bewegung eines Exzenterhebels 36 umgesetzt, der das Exzenterlager 28 mit seinem einen Ende von außen umgreift und an seinem gegenüberliegenden Ende an einer Exzenterhebelachse 40 verschwenkbar gelagert ist.

Am Exzenterhebel 36 ist ein Drehlager bestehend aus einer Lagerachse 38 und einem Lager 39 aufgenommen, von dem ein Schwinghebel 52 angetrieben wird, der drehfest mit der Werkzeugspindel 30 verbunden ist.

Auf diese Weise wird die oszillierende Antriebsbewegung des Exzenterhebels 36 mit Hilfe einer aus Lagerachse 38, Lager 39 und Schwinghebel 52 bestehenden Bewegungsumkehreinrichtung in eine oszillierende Antriebsbewegung der Werkzeugspindel 30 mit umgekehrtem Drehsinn wie die Antriebsbewegung des Exzenterhebels 36 umgesetzt. Diese Drehrichtungsumkehr führt zu einer spürbaren Senkung der vom Exzenterkoppeltrieb 15 ausgehenden Vibrationen (zu Einzelheiten wird auf die EP 11 176 980.8 verwiesen, die hier vollständig durch Bezugnahme eingeschlossen wird).

Der Exzenterkoppeltrieb 15, der die Bewegung des Exzenterzapfens 26 in die oszillierende Antriebsbewegung der Werkzeugspindel 30 umsetzt und hierbei die Antriebsbewegung des Exzenterhebels 36 in die Antriebsbewegung des Schwinghebels 52 mit umgekehrtem Drehsinn umsetzt, der schließlich die Werkzeugspindel 30 antreibt, ist innerhalb des Getriebegehäuses 17 aufgenommen.

Außerhalb des Getriebegehäuses 17, jedoch innerhalb des Maschinengehäuses 12 ist auf der Exzenterhebelachse 40 ein Ausgleichsgewicht 42 aufgenommen, das die durch den Exzenterhebel 36 und den Schwinghebel 52 verursachte Unwucht ausgleicht.

Die gewählte Untersetzung des Zahnriementriebes 16 und die Auslegung des Exzenterkoppeltriebs 15 führt zu einer Nenn-Schwingzahl der Werkzeugspindel 30 von 11.000 1/min und einem Verschwenkwinkel von ± 3° (6° absolut) an der Werkzeugspindel 30. Dies ist für ein Schleifwerkzeug 44 bis zu einem Durchmesser von etwa 150 mm optimal.

Eine höhere Frequenz und ein noch größerer Verschwenkwinkel würden zu zu starker Geräuschentwicklung und erhöhtem Verschleiß führen.

Durch die Verwendung des Zahnriementriebes 16 ergibt sich gegenüber einer herkömmlichen Ausführung mit einem Zahnradgetriebe ein deutlich geräuschärmerer Lauf und ein geringerer Verschleiß. Dabei kann vorteilhaft der Zahnriementrieb 16 im mit Fett bzw. Öl gefülltem Raum des Getriebegehäuses 17 aufgenommen sein, ohne dass Abdichtungsmaßnahmen erforderlich sind. Vielmehr wirken die innerhalb des Getriebegehäuses 17 aufgenommenen Schmierstoffe positiv auf den Zahnriementrieb 16 und erhöhen dessen Lebensdauer.

## Patentansprüche

1. Oszillierend angetriebene Werkzeugmaschine, mit einer durch einen Motor (13) rotatorisch antreibbaren Motorwelle (14), die über ein Getriebe (16) und einen Exzenterkoppeltrieb (15) mit einer Werkzeugspindel (30) zu deren oszillierenden Antrieb koppelbar ist, **dadurch gekennzeichnet, dass** das Getriebe (16) als Zahnriementrieb (16) ausgebildet ist, der ein erstes vom Motor (13) angetriebenes Riemenrad (18) aufweist, und der ein zweites Riemenrad (20) aufweist, das den Exzenterkoppeltrieb (15) antreibt, dass der Exzenterkoppeltrieb (15) einen Exzenterzapfen (26) aufweist, der vom zweiten Riemenrad (20) angetrieben wird, dass der Exzenterzapfen (26) gemeinsam mit einem darauf gehaltenen Exzenterlager (28) auf dem zweiten Riemenrad (20) aufgenommen ist, dass das zweite Riemenrad (20) einen Massenausgleich zum Ausgleich der durch den Exzenterzapfen (26) und das Exzenterlager (28) verursachten Unwucht aufweist, und dass der Exzenterkoppeltrieb (15) zur Umsetzung einer vom Exzenterkoppeltrieb (15) erzeugten oszillierenden Antriebsbewegung in eine oszillierende Antriebsbewegung der Werkzeugspindel (30) mit entgegengesetztem Drehsinn ausgebildet ist.

2. Werkzeugmaschine nach Anspruch 1, **dadurch gekennzeichnet, dass** der Zahnriementrieb (16) geschmiert ist.

3. Werkzeugmaschine nach Anspruch 1 oder 2, **dadurch gekennzeichnet, dass** der Zahnriementrieb (16) eine Untersetzung ins Langsame aufweist, vorzugsweise im Bereich von 1: 2 bis 1:5, bevorzugt im Bereich von 1:2,5 bis 1:3,2.

4. Werkzeugmaschine nach Anspruch 1, **dadurch gekennzeichnet, dass** das zweite Riemenrad (20) auf der Seite, auf der der Exzenterzapfen (26) angeordnet ist, eine Aussparung (50) aufweist.

5. Werkzeugmaschine nach einem der Ansprüche 1 bis 4, **dadurch gekennzeichnet, dass** der Exzenterkoppeltrieb (15) einen Exzenterhebel (36) umfasst, der an einem ersten Ende schwenkbar gelagert ist und an einem zweiten Ende vom Exzenterzapfen (26) angetrieben ist.

6. Werkzeugmaschine nach Anspruch 5, **dadurch gekennzeichnet, dass** die Werkzeugspindel (30) mittels eines Schwinghebels (52) angetrieben ist, der am Exzenterhebel (36) drehbeweglich angreift.

7. Werkzeugmaschine nach einem der vorhergehenden Ansprüche, **dadurch gekennzeichnet, dass** der Exzenterkoppeltrieb (15) ein Ausgleichsgewicht (42) aufweist, das vom Exzenterhebel (36) angetrieben ist.

8. Werkzeugmaschine nach Anspruch 7, **dadurch gekennzeichnet, dass** das Ausgleichsgewicht (42) am äußeren Ende des Exzenterhebels (36) aufgenommen ist.

9. Werkzeugmaschine nach Anspruch 8, **dadurch gekennzeichnet, dass** das Ausgleichsgewicht (42) außerhalb eines Getriebegehäuses (17), jedoch innerhalb eines Maschinengehäuses (12) aufgenommen ist, das das Getriebegehäuse (17) umschließt.

## Claims

1. Oscillating driven power tool, comprising a motor shaft (14) driven rotationally by a motor (13), which motor shaft can be coupled by a gear (16) and an eccentric coupling drive (15) to a tool spindle (30) for the oscillating drive of the latter, **characterised in that** the gear (16) is designed as a toothed-belt drive (16) which comprises a first belt wheel (18) driven by the motor (13) and which comprises a second belt wheel (20) which drives the eccentric coupling drive (15), **in that** the eccentric coupling drive (15) comprises an eccentric pin (26) which is driven by the second belt wheel (20), **in that** the eccentric pin (26) is mounted together with an eccentric bearing (28) held thereon on the second belt wheel (20), **in that** the second belt wheel (20) comprises a mass balance for balancing the imbalance caused by the eccentric pin (26) and the eccentric bearing (28) and **in that** the eccentric coupling drive (15) is designed for converting an oscillating drive movement produced by the eccentric coupling drive (15) into an oscillating drive movement of the tool spindle (30) with an opposite direction of rotation.

2. Power tool according to claim 1, **characterised in that** the toothed-belt drive (16) is lubricated.

3. Power tool according to claim 1 or 2, **characterised in that** the toothed-belt drive (16) has a reduction ratio, preferably in the range of 1:2 to 1:5, preferably in the range of 1:2,5 to 1:3,2.

4. Power tool according to claim 1, **characterised in that** the second belt wheel (20) comprises a cut-out (50) on the side on which the eccentric pin (26) is arranged.

5. Power tool according to any of claims 1 to 4, **characterised in that** the eccentric coupling drive (15) comprises an eccentric lever (36) which is pivotably mounted at a first end and at a second end is driven by the eccentric pin (26).

6. Power tool according to claim 5, **characterised in that** the tool spindle (30) is driven by means of a rocker arm (52) which engages rotatably on the eccentric lever (36).

7. Power tool according to any of the preceding claims, **characterised in that** the eccentric coupling drive (15) comprises a counterweight (42) which is driven by the eccentric lever (36).

8. Power tool according to claim 7, **characterised in that** the counterweight (42) is arranged at the outer end of the eccentric lever (36).

9. Power tool according to claim 8, **characterised in that** the counterweight (42) is mounted outside a gear housing (17) but inside a machine housing (12) which surrounds the gear housing (17).

## Revendications

1. Machine-outil entraînée par oscillation, avec un arbre moteur (14) entraînable en rotation par un moteur (13) qui peut être couplé par le biais d'un engrenage (16) et d'un entraînement de couplage à excentrique (15) avec une broche d'outil (30) pour son entraînement oscillant, **caractérisée en ce que** l'engrenage (16) est réalisé en tant qu'entraînement de courroie dentée (16) qui présente une première roue de courroie (18) entraînée par le moteur (13), et qui présente une seconde roue de courroie (20) qui entraîne l'entraînement de couplage à excentrique (15), que l'entraînement de couplage à excentrique (15) présente un tenon à excentrique (26) qui est entraîné par la seconde roue de courroie (20), que le tenon à excentrique (26) est reçu conjointement avec un palier à excentrique (28) maintenu dessus sur la seconde roue de courroie (20), que la seconde roue de courroie (20) présente une compensation de masse pour la compensation du déséquilibre causé par le tenon à excentrique (26) et le palier à excentrique (28), et que l'entraînement de couplage à excentrique (15) est réalisé pour la conversion d'un mouvement d'entraînement oscillant généré par l'entraînement de couplage à excentrique (15) en un mouvement d'entraînement oscillant de la broche d'outil (30) avec un sens de rotation opposé.

2. Machine-outil selon la revendication 1, **caractérisée en ce que** l'entraînement de courroie dentée (16) est lubrifié.

3. Machine-outil selon la revendication 1 ou 2, **caractérisée en ce que** l'entraînement de courroie dentée (16) présente une réduction, de préférence dans la plage de 1:2 à 1:5, de préférence dans la plage de 1:2,5 à 1:3,2.

4. Machine-outil selon la revendication 1, **caractérisée en ce que** la seconde roue de courroie (20) présente sur le côté sur lequel le tenon à excentrique (26) est disposé, un évidement (50).

5. Machine-outil selon l'une quelconque des revendications 1 à 4, **caractérisée en ce que** l'entraînement de couplage à excentrique (15) comporte un levier à excentrique (36) qui est logé de manière pivotante à une première extrémité et est entraîné à une seconde extrémité par le tenon à excentrique (26).

6. Machine-outil selon la revendication 5, **caractérisée en ce que** la broche d'outil (30) est entraînée au moyen d'un levier oscillant (52) qui agit de manière mobile en rotation sur le levier à excentrique (36).

7. Machine-outil selon l'une quelconque des revendications précédentes, **caractérisée en ce que** l'entraînement de couplage à excentrique (15) présente un contrepoids (42) qui est entraîné par le levier à excentrique (36).

8. Machine-outil selon la revendication 7, **caractérisée en ce que** le contrepoids (42) est reçu à l'extrémité arrière du levier à excentrique (36).

9. Machine-outil selon la revendication 8, **caractérisée en ce que** le contrepoids (42) est reçu en dehors d'un boîtier d'engrenage (17), toutefois dans un boîtier de machine (12) qui entoure le boîtier d'engrenage (17).
